# EUROPEAN PATENT APPLICATION

(11) **EP 4 379 829 A1**
(43) Date of publication of application: **05.06.2024**
(21) Application number: 22849040.5
(22) Date of filing: 10.06.2022
(51) Int. Cl.: H01M 4/02, H01M 4/13, H01M 4/62, H01G 11/28, H01G 11/38

(54) **ELECTRODE**

(30) Priority: 30.07.2021 JP 2021125550
(71) Applicant: Panasonic Intellectual Property Management Co., Ltd., Osaka-shi, Osaka 540-6207 (JP)
(72) Inventor: GONJO, Takayuki, Kadoma-shi, Osaka 571-0057 (JP); IZUMI, Reiko, Kadoma-shi, Osaka 571-0057 (JP); YAMASHITA, Hiroki, Kadoma-shi, Osaka 571-0057 (JP); KOTANI, Norihiro, Kadoma-shi, Osaka 571-0057 (JP)
(74) Representative: Novagraaf International SA
(86) International application number: PCT/JP2022/023437
(87) International publication number: WO 2023/007962

(57) **Abstract**

An electrode according to one embodiment of the present invention is provided with a conductive intermediate layer that is arranged between a core material and a mixture layer. The mixture layer contains an active material and a first binder; and the intermediate layer contains a conductive material and a second binder. The conductive material has a particle size distribution which has a first peak that is within the particle diameter range from 0.005 µm to 0.07 µm and a second peak that is within the particle diameter range from 0.5 µm to 10 µm. The content of the particles that constitute the first peak is 1% by mass to 40% by mass of the mass of the conductive material. The second binder is mainly composed of a thermoplastic resin that has a melting point of 100°C to 200°C, and has a composition that is different from the composition of the first binder.

## Description

### TECHNICAL FIELD

The present disclosure generally relates to an electrode, and more specifically relates to an electrode for a secondary battery.

### BACKGROUND ART

An electrode for a secondary battery, such as a lithium-ion battery, typically comprises a metal foil as a core, and a mixture layer formed on the core and including an active material, a conductive agent, and a binder. An electrode in which a conductive intermediate layer is provided between the core and the mixture layer is also known (see Patent Literatures 1 to 5). Such an intermediate layer reduces resistance on the interface between the core and the mixture layer to contribute to improvement of output characteristics of the battery, for example. Patent Literatures 1 to 5 disclose that two types of particles having particle diameters different from each other are used as conductive particles included in the intermediate layer.

The conventional electrode is typically produced by a wet method including: applying an electrode mixture slurry to a surface of the core; and drying and compressing the coating. A problem with this case is that migration, travelling of the binder during drying of the coating, easily occurs. The binder migration increases the amount of the binder on the surface side compared with the core side of the mixture layer, leading to uneven distribution of the binder in the thickness direction of the mixture layer. In recent years, a dry method has been investigated, the method including: rolling and shaping an electrode mixture into a sheet to produce an electrode mixture sheet; and laminating the sheet onto the core to manufacture an electrode.

### CITATION LIST

### PATENT LITERATURE

PATENT LITERATURE 1: Japanese Unexamined Patent Application Publication No. 2010-109080
PATENT LITERATURE 2: Japanese Patent No. 5098954
PATENT LITERATURE 3: Japanese Patent No. 4352349
PATENT LITERATURE 4: Japanese Patent No. 5648869
PATENT LITERATURE 5: Japanese Patent No. 6239936

### SUMMARY

### TECHNICAL PROBLEM

As noted above, it is effective to provide the conductive intermediate layer between the core and the mixture layer of the electrode for reducing interface resistance between the core and the mixture layer. In particular, the electrode manufactured by the dry method tends to have an increased interface resistance, and therefore, providing the conductive intermediate layer is considered to be one effective means for reducing the interface resistance. On the other hand, it is an important challenge to increase peeling strength of the mixture layer by increasing an adhesive force of the mixture layer to the surface of the core, as well as the reduction in the interface resistance. However, it is not easy to increase the adhesive force of the mixture layer to the core and also reduce in the interface resistance at the same time. The techniques disclosed in Patent Literatures 1 to 5 still have room for improving both of these two characteristics at the same time.

It is an advantage of the present disclosure to provide an electrode having low interface resistance between the core and the mixture layer and having a high adhesive force of the mixture layer to the core.

### SOLUTION TO PROBLEM

An electrode of an aspect of the present disclosure is an electrode comprising: a core; a mixture layer provided on the core; and a conductive intermediate layer provided between the core and the mixture layer, wherein the mixture layer includes an active material and a first binder, the intermediate layer includes a conductive agent and a second binder, the conductive agent has particle size distribution including: a first peak of a particle diameter within a range of greater than or equal to 0.005 µm and less than or equal to 0.07 µm; and a second peak of a particle diameter within a range of greater than or equal to 0.5 µm and less than or equal to 10 µm, a content of particles to which the first peak is assigned is greater than or equal to 1 mass% and less than or equal to 40 mass% based on the mass of the conductive agent, and the second binder contains a thermoplastic resin having a melting point of greater than or equal to 100°C and less than or equal to 200°C as a main component and has a composition differing from that of the first binder.

An electrode of another aspect of the present disclosure is an electrode comprising: a core; a mixture layer provided on the core; and a conductive intermediate layer provided between the core and the mixture layer, wherein the mixture layer includes an active material and a first binder, the intermediate layer includes a conductive agent and a second binder, the conductive agent includes: first particles having a particle diameter of greater than or equal to 0.005 µm and less than or equal to 0.07 µm and forming an aggregation structure having a form like a string of beads; and second particles having a particle diameter of greater than or equal to 0.5 µm and less than or equal to 10 µm, a content of the first particles is greater than or equal to 1 mass% and less than or equal to 40 mass% based on the mass of the conductive agent, and the second binder contains a thermoplastic resin having a melting point of greater than or equal to 100°C and less than or equal to 200°C as a main component and has a composition differing from that of the first binder.

### ADVANTAGEOUS EFFECT OF INVENTION

The electrode according to the present disclosure yields low interface resistance between the core and the mixture layer and yields a high adhesive force of the mixture layer to the core.

### BRIEF DESCRIPTION OF DRAWING

FIG. 1 is a view schematically illustrating a cross section of an electrode of an example of an embodiment.
FIG. 2 is an enlarged view of the portion A in FIG. 1.
FIG. 3(a) is a view illustrating the step of mixing materials for the mixture, and FIG. 3(b) is a view illustrating the step of rolling the mixture, in the manufacturing process of an electrode of an example of an embodiment.
FIG. 4 is a view illustrating the step of laminating the mixture sheet.
FIG. 5 is a view schematically illustrating a cross section of an intermediate layer of Comparative Example.
FIG. 6 is a view schematically illustrating a cross section of an intermediate layer of Comparative Example.

### DESCRIPTION OF EMBODIMENTS

Hereinafter, examples of embodiments of the electrode according to the present disclosure will be described in detail with reference to the drawings. The present disclosure encompasses configurations resulting from selective combinations of any of embodiments described below and modified examples.

The electrode according to the present disclosure is suitable for a non-aqueous electrolyte secondary battery such as a lithium-ion battery, but may be applied for a battery including an aqueous electrolyte or for a power storage device such as a capacitor. Hereinafter, a case of application to an electrode for a non-aqueous electrolyte secondary battery, particularly a positive electrode, will be described as an example.

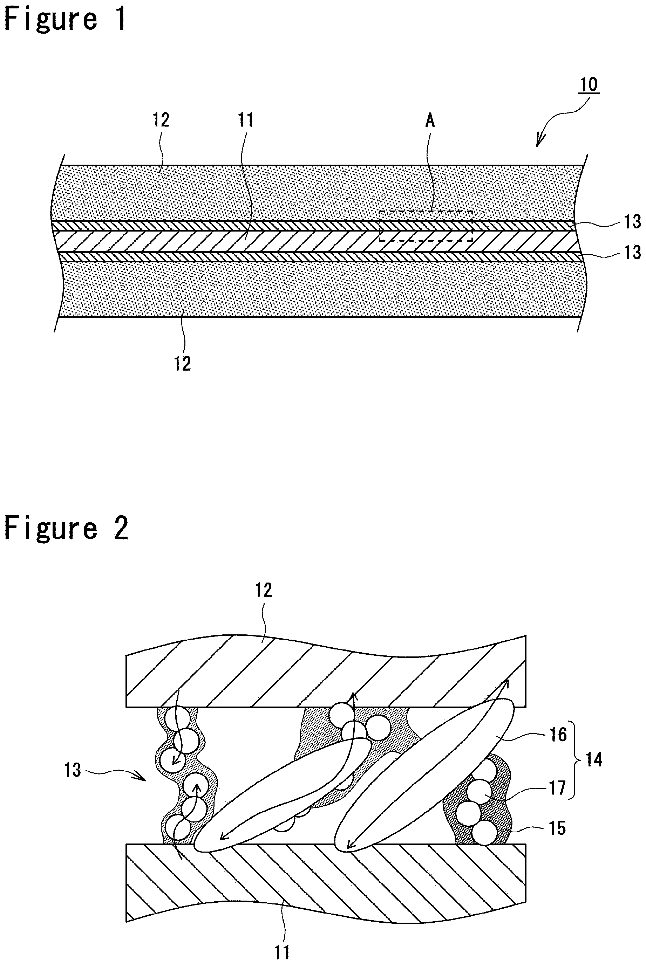

FIG. 1 is a view schematically illustrating a cross section of an electrode 10 of an example of an embodiment. As illustrated in FIG. 1, the electrode 10 comprises a core 11, a mixture layer 12 provided on the core 11, and a conductive intermediate layer 13 provided between the core 11 and the mixture layer 12. The electrode 10 comprises the intermediate layers 13 and the mixture layers 12 on both surfaces of the core 11. The thickness of the mixture layer 12 is, for example, greater than or equal to 30 µm and less than or equal to 120 µm, and preferably greater than or equal to 50 µm and less than or equal to 100 µm on one side of the core 11. The electrode 10 may be a long electrode to form a wound electrode assembly, or may be a rectangular electrode to form a stacked electrode assembly.

For the core 11, a metal foil, or a film having a metal layer formed on a surface thereof may be used, for example. The thickness of the core 11 is, for example, greater than or equal to 5 µm and less than or equal to 20 µm. In a case of the positive electrode, a metal foil including aluminum as a main component may be used for the core 11. In a case of the negative electrode, a metal foil including copper as a main component may be used. The main component herein means a constituent with the highest mass proportion. The core 11 may be aluminum foil made of substantially 100% aluminum, or may be copper foil made of substantially 100% copper.

The mixture layer 12, which is also called an active material layer, includes an active material and a binder (a first binder). The mixture layer 12 may include a conductive agent, and particularly in a case where the electrode 10 is the positive electrode, the mixture layer 12 preferably includes the conductive agent. Examples of the conductive agent include carbon materials such as carbon black, acetylene black, Ketjenblack, carbon nanotube, and graphite. The content of the conductive agent is, for example, greater than or equal to 0.5 mass% and less than or equal to 5 mass% based on the mass of the mixture layer 12. Although a detail will be described later, the mixture layer 12 is preferably a mixture sheet 12z manufactured by a dry process, and the mixture layer 12 preferably includes a fibrous binder.

The conductive agent included in the mixture layer 12 is preferably conductive particles having a particle diameter of greater than or equal to 0.005 µm and less than or equal to 0.07 µm and forming an aggregation structure having a form like a string of beads. For the conductive agent in the mixture layer 12, those same as or similar to first particles 16 in the intermediate layer 13, described later, may be used. The mixture layer 12 and the intermediate layer 13 including the above conductive particles may form the aggregation structure having a form like a string of beads also on an interface between the mixture layer 12 and the intermediate layer 13, and facilitates achievement of conduction on the interface between the mixture layer 12 and the intermediate layer 13.

For the active material of the positive electrode (positive electrode active material), a lithium-transition metal composite oxide is typically used. Examples of the metal element contained in the lithium-transition metal composite oxide include Ni, Co, Mn, Al, B, Mg, Ti, V, Cr, Fe, Cu, Zn, Ga, Sr, Zr, Nb, In, Sn, Ta, and W. Among them, at least one selected from the group consisting of Ni, Co, and Mn is preferably contained. The content of the positive electrode active material is preferably greater than or equal to 85 mass% and less than or equal to 99 mass%, and more preferably greater than or equal to 90 mass% and less than or equal to 99 mass%, based on the mass of the mixture layer 12. (The same also applies to the content of a negative electrode active material.)

The positive electrode active material is of secondary particles formed by aggregation of a plurality of primary particles. The median diameter (D50) on a volumetric basis of the positive electrode active material is preferably greater than or equal to 3 µm and less than or equal to 30 µm. The D50 means the particle diameter at which a cumulative frequency is 50% from a smaller particle diameter side in a particle size distribution on a volumetric basis. The particle size distribution of the positive electrode active material may be measured by using a laser diffraction-type particle size distribution analyzer (for example, MT3000II, manufactured by MicrotracBEL Corp.) with water as a dispersion medium.

For the active material of the negative electrode (the negative electrode active material), a carbon-based active material are used, including a natural graphite such as flake graphite, massive graphite, and amorphous graphite, and an artificial graphite such as massive artificial graphite (MAG) and graphitized mesophase-carbon microbead (MCMB). For the negative electrode active material, an active material containing, for example, Si or Sn, which forms an alloy with lithium, may also be used.

The fibrous binder included in the mixture layer 12 may be produced by, for example, fibrillating polytetrafluoroethylene (PTFE) particles, which fall within a fibrillable (fiberizable) fine powder, by using a dry grinder such as a jet mill grinder. The average particle diameter of the PTFE particles is not particularly limited, but preferably greater than or equal to 100 µm and less than or equal to 500 µm, and more preferably greater than or equal to 100 µm and less than or equal to 400 µm. The average particle diameter of the PTFE particles may be determined by observing the PTFE particles with a scanning electron microscope (SEM). Specifically, after outer shapes of randomly selected 100 particles are specified, the major diameter (longest diameter) of each of the 100 particles is determined, and the average value thereof is obtained as the average particle diameter.

The content of the fibrous binder is, for example, greater than or equal to 0.5 mass% and less than or equal to 5 mass% based on the mass of the mixture layer 12. The fibrous binder adheres to the particle surface of the active material, and intertwines with the active material. In other words, the active material is held by the fibrous binder present in the form of a mesh to form the layered structure of the mixture layer 12. The mixture layer 12 may include a particulate binder such as polyvinylidene fluoride (PVdF), which is not fibrillated, in addition to the fibrous binder.

When the mixture layer 12 is trisected in the thickness direction into a first region, a second region, and a third region from a side of the core 11, the content (a) of the fibrous binder in the first region, the content (b) of the fibrous binder in the second region, and the content (c) of the fibrous binder in the third region preferably satisfy (c - a)/(a + b + c) ≤ ±10%, more preferably satisfy (c - a)/(a + b + c) ≤ ±5%. In other words, the fibrous binder is not present locally in part of the mixture layer 12 but present substantially evenly in an entirety of the mixture layer 12. When the mixture layer 12 is a positive electrode mixture layer, the density of the positive electrode active material in the mixture layer 12 is preferably greater than or equal to 3.3 g/cc and less than or equal to 4.0 g/cc.

Hereinafter, the constitution of the intermediate layer 13 will be described in detail with reference to FIG. 2. FIG. 2 is an enlarged view of the portion A in FIG. 1.

As illustrated in FIG. 2, the intermediate layer 13 is interposed between the core 11 and the mixture layer 12, and the intermediate layer 13 reduces the interface resistance between the core 11 and the mixture layer 12 and increases the adhesive force of the mixture layer 12 to the core 11. That is, the intermediate layer 13 functions as a conductive layer and an adhesive layer. The intermediate layer 13 includes a conductive agent 14 and a binder 15 (a second binder). The thickness of the intermediate layer 13 is, for example, greater than or equal to 1 µm and less than or equal to 10 µm. The intermediate layer 13 includes two types of conductive particles having particle diameters different from each other (first particles 16 and second particles 17) as the conductive agent 14. This may achieve a good conductive path to reduce the interface resistance between the core 11 and the mixture layer 12 and, at the same time, increase the adhesive force of the mixture layer 12 to the core 11.

The content of the conductive agent 14 is preferably greater than or equal to 50 mass% and less than or equal to 90 mass%, and more preferably greater than or equal to 60 mass% and less than or equal to 90 mass% or greater than or equal to 65 mass% and less than or equal to 85 mass%, based on the mass of the intermediate layer 13. The content of the conductive agent 14 within the above range facilitates achievement of both of the low interface resistance and the high adhesive force on the interface between the core 11 and the mixture layer 12. In the present embodiment, the intermediate layer 13 is composed of substantially only the conductive agent 14 and the binder 15. The content of the binder 15 is preferably greater than or equal to 10 mass% and less than or equal to 50 mass%, and more preferably greater than or equal to 10 mass% and less than or equal to 40 mass% or greater than or equal to 15 mass% and less than or equal to 35 mass%, based on the mass of the intermediate layer 13.

The conductive agent 14 has particle size distribution including: a first peak of a particle diameter within a range of greater than or equal to 0.005 µm and less than or equal to 0.07 µm; and a second peak of a particle diameter within a range of greater than or equal to 0.5 µm and less than or equal to 10 µm. The particle size distribution of the conductive agent 14 is particle size distribution on a volumetric basis, and determined by measuring diameters of circumscribed circles of particles in a sectional SEM image of the intermediate layer 13. When a particle size distribution of a powder of the conductive agent 14 to be added into the intermediate layer 13 is measured by using a laser diffraction-type particle size distribution analyzer, a value similar to the particle size distribution determined from the sectional SEM image is obtained. The particle diameter range of the first peak is more preferably greater than or equal to 0.02 µm and less than or equal to 0.04 µm. The particle diameter range of the second peak is more preferably greater than or equal to 2 µm and less than or equal to 4 µm.

The conductive agent 14 includes: first particles 16 having a particle diameter of greater than or equal to 0.005 µm and less than or equal to 0.07 µm and forming an aggregation structure having a form like a string of beads; and second particles 17 having a particle diameter of greater than or equal to 0.5 µm and less than or equal to 10 µm. The aggregation structure having a form like a string of beads is also called a texture structure. In the present embodiment, the first particles 16 form the above first peak, and the second particles 17 form the above second peak 17. The intermediate layer 13 is formed by using the first particles 16 and the second particles 17, which have different D50 on a volumetric basis measured by using a laser diffraction-type particle size distribution analyzer. The D50 of the first particles 16 is greater than or equal to 0.005 µm and less than or equal to 0.07 µm, and the D50 of the second particles 17 is greater than or equal to 0.5 µm and less than or equal to 10 µm. The particle diameter range of the first particles 16 is more preferably greater than or equal to 0.02 µm and less than or equal to 0.04 µm. The particle diameter range of the second particles 17 is more preferably greater than or equal to 2 µm and less than or equal to 4 µm.

The content of the first particles 16 is greater than or equal to 1 mass% and less than or equal to 40 mass% based on the mass of the conductive agent 14. The conductive agent 14 may include third particles, which does not fall within the first particles 16 or the second particles 17. However, the conductive agent 14 of the present embodiment is composed of substantially only the first particles 16 and the second particles 17, and the content of the second particles 17 is greater than or equal to 60 mass% and less than or equal to 99 mass% based on the mass of the conductive agent 14. Using the conducive agent 14 having the above particle size distribution and regulating the blending ratio between the first particles 16 as small particles and the second particles 17 as large particles within the above range enable to achieve the high adhesive force and also the reduced resistance on the interface between the core 11 and the mixture layer 12.

The content of the first particles 16 is more preferably greater than or equal to 3 mass% and less than or equal to 35 mass%, and particularly preferably greater than or equal to 5 mass% and less than or equal to 30 mass%, based on the mass of the conductive agent 14. If the content of the first particles 16 is less than 1 mass%, the adhesive force of the mixture layer 12 to the surface of the core 11 decreases to cause difficulty in achievement of sufficient peeling strength. If the content of the first particles 16 exceeds 40 mass%, the interface resistance between the core 11 and the mixture layer 12 considerably increases. Although a detail will be described later, it is considered that the second particles 17 as large particles are unlikely to be incorporated into the binder 15, and that accordingly, adding a predetermined amount of the second particles 17 forms a good conductive path to reduce the interface resistance. In addition, it is considered that the first particles 16 as small particles have high compatibility with the binder 15, and that accordingly, adding a predetermined amount of the first particles 16 increases the peeling strength.

The conductive agent 14 includes, for example, particles having a particle diameter of greater than or equal to 0.5 µm and less than or equal to 10 µm and having an average aspect ratio of greater than or equal to 10 and less than or equal to 40. The particles having a particle diameter of greater than or equal to 0.5 µm and less than or equal to 10 µm are the second particles 17 as noted above, and thus the second particles 17 can be said to have an average aspect ratio of greater than or equal to 10 and less than or equal to 40. The aspect ratio of the conductive agent 14 is determined by measuring a major axis diameter and a minor axis diameter of the particle of the conductive agent 14 in the sectional SEM image of the intermediate layer 13, and dividing the major axis diameter by the minor axis diameter. The average aspect ratio is calculated by averaging found aspect ratios of randomly selected 100 particles. The average aspect ratio of the first particles 16 is less than 10, and preferably less than or equal to 5.

The conductive agent 14 is of particles of a material having conductivity. An example of a preferable conductive agent 14 is a carbon material. Specific examples of the carbon material include carbon black, acetylene black, Ketjenblack, carbon nanotube, and graphite. The first particles 16 and the second particles 17 may be the same type of carbon material, or may be different types of the carbon materials. The first particles 16 as small particles have a larger specific surface area per mass than the second particles 17 as large particles, and a BET specific surface area of the first particles 16 is, for example, greater than or equal to 100 m²/g and less than or equal to 150 m²/g.

The binder 15 contains a thermoplastic resin having a melting point of greater than or equal to 100°C and less than or equal to 200°C as a main component and has a composition differing from that of the binder in the mixture layer 12. The binder 15 is melted or softened in the laminating step described later, to strongly adhere to the core 11 and the mixture layer 12, for example. The mixture layer 12 preferably contains, as a main component, a resin that is unlikely to be melted or softened in the laminating step. A preferable combination of the binders in the layers is as follows: the binder in the mixture layer 12 is fibrillated PTFE and the binder 15 in the intermediate layer 13 is a homopolymer or copolymer of vinylidene fluoride.

The binder 15 is locally present around the first particles 16 in the intermediate layer 13, for example. Since the first particles 16 have a larger BET specific surface area than the second particles 17 and aggregate in a form like a string of beads, as noted above, the first particles 16 have high compatibility with the binder 15, and the binder 15 is present mainly around the first particles 16. In the present embodiment, the proportion of the region coated with the binder 15 in the surfaces of the first particles 16 is larger than the proportion of the region coated with the binder 15 in the surfaces of the second particles 17. The local presence of the binder 15 around the first particles 16 may be confirmed from an SEM image of the surface of the intermediate layer 13 by mapping analysis of constituent elements of the binder 15 with energy dispersing X-ray (EDX).

The intermediate layer 13 may be formed by applying a slurry including the conductive agent 14 and the binder 15 to the surface of the core 11, and drying the coating. Used for the conductive agent 14 are: the first particles 16 having D50 on a volumetric basis of greater than or equal to 0.005 µm and less than or equal to 0.07 µm; and the second particles 17 having D50 on a volumetric basis of greater than or equal to 0.5 µm and less than or equal to 10 µm. An example of a dispersion medium of the slurry is N-methyl-2-pyrrolidone (NMP). The intermediate layer 13 may by formed on the surface of the core 11 by using a dip-coating method or a spray-coating method.

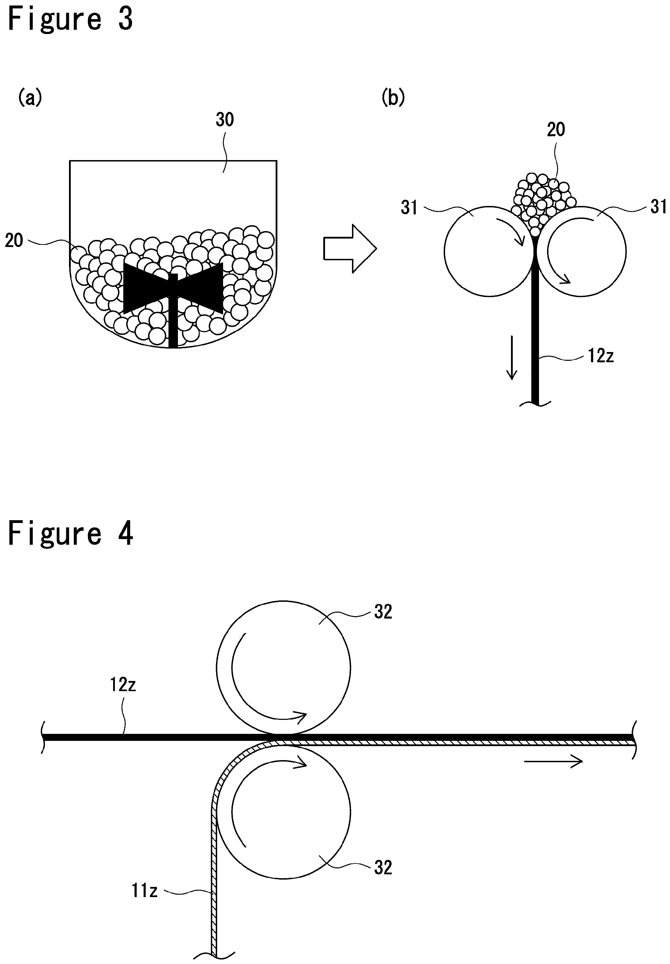

Hereinafter, a method for manufacturing the electrode 10 will be described with reference to FIG. 3 and FIG. 4. Although a method for manufacturing a positive electrode will be exemplified hereinafter, this manufacturing method may also be applied to manufacturing a negative electrode. FIG. 3(a) illustrates the step of mixing materials for the mixture to produce a mixture 20, and FIG. 3(b) illustrates the step of rolling the mixture 20 to produce a mixture sheet 12z. FIG. 4 illustrates the step of laminating a long core 1 1z and the mixture sheet 12z.

As illustrated in FIG. 3, the mixture sheet 12z is manufactured by a dry process involving use of the mixture 20 having a solids content of substantially 100%. Although a detail will be described later, the electrode 10 is manufactured by laminating the mixture sheet 12z onto both surfaces of the core 1 1z having the formed intermediate layer 13. In the dry process, no solvent is used for mixing the materials for the mixture, and the mixture 20 having a solids content of substantially 100% is produced. In the mixing step, the active material, the fibrous binder, and the conductive agent are mixed by using a mixer 30 to produce the mixture 20.

As the mixer 30, a conventionally known mechanical stirring mixer that can apply a mechanical shearing force may be used. Specific examples of the mixer 30 include a cutter mill, a pin mill, a bead mill, a fine-particle compounding machine (an apparatus generating a shearing force between: a rotor having a special shape and rotating at a high speed in a tank; and a collision plate), a granulator, and a kneader such as a twin-screw extrusion kneader and a planetary mixer. Among them, a cutter mill, a fine-particle compounding machine, a granulator, or a twin-screw extrusion kneader is preferable. In the mixing step, the materials for the mixture are mixed and the fibrous binder may be further fibrillated.

The treating time (time for applying the shearing force to the materials for the mixture) in the mixing step is preferably within several minutes, and greater than or equal to 0.5 minutes and less than or equal to 10 minutes, for example. An excessively long treating time may increase the amount of the conductive agent to be incorporated into the fibrous binder to thereby decrease conductivity of the mixture sheet 12z. The mixing step may include: the substep of producing a coated active material by mixing the active material and the conductive agent; and the substep of mixing the coated active material and the fibrous binder. Using the coated active material, which is produced by mixing the active material and the conductive agent, may shorten the time for mixing the coated active material and the fibrous binder. This may reduce the amount of the conductive agent to be incorporated into the fibrous binder.

For the dry mixing of the active material and the conductive agent, a mechano-fusion method may be used. Applying the mechano-fusion method increases the bonding force of the conductive agent to the particle surface of the active material. Examples of a mechano-fusion reactor include: Nobilta(R) crusher or MECHANO FUSION(R) crusher, manufactured by HOSOKAWA MICRON CORPORATION; Hybridizer(R) crusher, manufactured by NARA MACHINERY CO., LTD.; BALANCE GRAN, manufactured by FREUND-TURBO CORPORATION; and COMPOSI, manufactured by NIPPON COKE & ENGINEERING CO., LTD.

The mixture 20 obtained in the mixing step is formed into a sheet in the rolling step. In the example illustrated in FIG. 3(b), the mixture 20 is rolled by two rollers 31 to obtain the mixture sheet 12z. The two rollers 31 are disposed with a predetermined gap, and rotate directing to the same direction. The mixture 20 is fed into the gap between the two rollers 31 to be compressed with the two rollers 31, and to be stretched into a sheet. The two rollers 31 have, for example, the same roller diameter. The mixture sheet 12z may be passed through the gap between the two rollers 31 a plurality of times, or may be heat-pressed by using heated rollers 31.

The thickness of the mixture sheet 12z may be regulated with, for example, the gap between the two rollers 31, the peripheral speed, and the number of times of the stretching treatment. In the rolling step, the mixture 20 may be formed into a sheet by using two rollers 31 having peripheral speeds differing by a factor of greater than or equal to two. The ratio between the different peripheral speeds of the two rollers 31 facilitates the thinning of the mixture sheet 12z to improve the productivity. The mixture sheet 12z is preferably further compressed to be densified. In this compressing step, a linear pressure of greater than or equal to 1 t/cm and less than or equal to 3 t/cm may be applied, for example.

As illustrated in FIG. 4, the mixture sheet 12z is laminated onto the long core 11z to provide the mixture sheet 12z as the mixture layer 12 on the surface of the core 11z. Although FIG. 4 illustrates appearance of bonding the mixture sheet 12z only on one surface of the core 11z, the mixture sheets 12z are bonded onto both the surfaces of the core 11z. The two mixture sheets 12z may be simultaneously bonded onto both the surfaces of the core 11z. Alternatively, one mixture sheet 12z may be bonded onto one surface of the core 11z, and then the other mixture sheet 12z may be bonded onto the other surface.

In the laminating step, the mixture sheet 12z is laminated onto the surface of the core 11z by using two rollers 32. The temperature of the two rollers 32 is, for example, greater than or equal to 50°C and less than or equal to 300°C, and preferably greater than or equal to 100°C and less than or equal to 200°C. The linear pressure applied by the two rollers 32 is greater than or equal to 0.1 t/cm and less than or equal to 2 t/cm. The core 11z with the mixture sheets 12z bonded onto both its surfaces is cut to a predetermined electrode size to obtain the electrode 10 having the above constitution. The intermediate layer 13 is formed on each of both surfaces of the core 11z to be subjected to the laminating step, and the mixture sheets 12z are bonded onto both the surfaces of the core 11z via the intermediate layer 13. The intermediate layer 13 is formed by applying the slurry including the two types of the conductive agent and the binder on each of both surfaces of the core 11z, and drying and rolling the coating, as noted above.

### EXAMPLES

Hereinafter, the present disclosure will be further described by way of Examples, but the present disclosure is not limited to these Examples.

### <Example 1>

### [Formation of Intermediate Layer]

Carbon black having D50 on a volumetric basis (hereinafter, simply referred to as D50) of 0.023 µm and having an average aspect ratio of 1 to 1.3 (first particles) and carbon black having D50 of 2.4 µm and having an average aspect ratio of 24 (second particles) were mixed at a mass ratio of 25:75 to prepare a conductive agent. This conductive agent and a homopolymer of vinylidene fluoride (PVdF) were mixed at a mass ratio of 83:17, and NMP was used as a dispersion medium to prepare a slurry. Then, this slurry was applied to surfaces of an electrode core consisting of aluminum foil with 14.4 µm in thickness, and the coating was dried and then rolled with rollers to form intermediate layers including the two types of carbon black having different D50 and PVdF on the core surface. The core with the intermediate layers formed on both the surfaces was cut to a predetermined electrode size.

### [Production of Positive Electrode Mixture Sheet]

By using NOB300-Nobilta(R), manufactured by HOSOKAWA MICRON CORPORATION, 1000 g of a lithium-transition metal composite oxide and 10 g of carbon black were mixed for 5 minutes to produce a carbon-coated positive electrode active material in which carbon black adhered to a particle surface of the composite oxide. This carbon-coated positive electrode active material and fibrillated PTFE particles as a fibrous binder were fed into Wonder Crusher, manufactured by OSAKA CHEMICAL Co., Ltd., at a mass ratio of 101:0.8, and subjected to a mixing treatment at a room temperature at a number of rotation of Level 5 for 5 minutes. The number of rotation of Wonder Crusher is maximum 28000 rpm at Level 10.

The above mixing treatment yielded a positive electrode mixture in which the carbon-coated positive electrode active material and the fibrous binder were uniformly dispersed. The obtained positive electrode mixture had a solids content of 100%. This positive electrode mixture was rolled by passing through a gap between two rollers to produce a positive electrode mixture sheet. The peripheral speed ratio of the two rollers was set to 1:3 to regulate the thickness of the positive electrode mixture sheet to greater than or equal to 100 µm and less than or equal to 120 µm. Then, the obtained positive electrode mixture sheet was compressed by passing through a gap between two rollers at a room temperature.

### [Production of Positive Electrode (Laminating Step)]

The positive electrode mixture sheets were disposed on the core with the intermediate layers formed on both the surfaces, and the stacked body of the positive electrode mixture sheets and the core was pressed (linear pressure: 0.5 t/cm) by using two rollers at a normal temperature (25°C) to obtain a positive electrode A1, in which the intermediate layers and the positive electrode mixture layers (positive electrode mixture sheets) were provided on both the surfaces of the core. The thickness of the positive electrode A1 was regulated to greater than or equal to 170 µm and less than or equal to 180 µm. The density of the positive electrode active material of the positive electrode mixture layer was regulated to 3.7 g/cc. When the mixture layer was trisected in the thickness direction into a first region, a second region, and a third region from a side of the core, the content (a) of the fibrous binder in the first region, the content (b) of the fibrous binder in the second region, and the content (c) of the fibrous binder in the third region satisfied (c - a) × 100/(a + b + c) = 1%.

Interface resistance and peeling strength of the positive electrode A1 were measured by the following methods. The distribution of the binder (whether or not the binder was present locally) in the intermediate layer was observed. Table 1 shows the measurement results as a mass proportion of fluorine (F mass%) together with the constitution of the intermediate layer.

### [Measurement of Interface Resistance]

The interface resistance of the positive electrode A1 was measured by using an electrode resistance meter (device name: XF057), manufactured by HIOKI E.E. CORPORATION. The measurement current was set to 100 µA, and the voltage range was set to 0.5 V.

### [Evaluation of Peeling Strength]

The positive electrode mixture layer of the positive electrode A1 having a size of 10 mm × 90 mm was attached onto a double-sided tape (NICETACK NW-20, manufactured by Nichiban Co., Ltd.) adhered to a sample stage. In an environment at 25°C, one end of the positive electrode A1 was lifted in the vertical direction relative to the sample stage at a constant rate of 20 mm/min by using a material testing instrument (ORIENTEC RTC-1150A, manufactured by A&D Company, Limited). The load when the positive electrode mixture layer was peeled from the core was measured, and this load was used as the peeling strength of the mixture layer.

### [Distribution of Binder in Intermediate Layer]

In an SEM image of the intermediate layer surface photographed before formation of the mixture layer, three positions on surfaces of the secondary particles and three positions of regions other than the surfaces of the second particles were selected. The selected six positions were subjected to mapping analysis of carbon and fluorine with EDX. The mass proportions of fluorine at the selected six positions were calculated by using an image analysis software. The average value was calculated on the three positions of the surfaces of the second particles, and the average value was also calculated on the three positions of the regions other than the surfaces of the second particles. Note that the region other than the surfaces of the second particles corresponds to a periphery of the first particles. The observation magnification is an appropriate magnification within a range of greater than or equal to 2000 and less than or equal to 20000.

### <Example 2>

A positive electrode A2 was produced and subjected to the above performance evaluations in the same manner as in Example 1 except that, in the formation of the intermediate layer, the mass ratio between the conductive agent and the binder was changed to 71:29.

### <Example 3>

A positive electrode A3 was produced and subjected to the above performance evaluations in the same manner as in Example 2 except that, in the formation of the intermediate layer, the mass ratio between the first particles and the second particles was changed to 10:90.

### <Example 4>

A positive electrode A4 was produced and subjected to the above performance evaluations in the same manner as in Example 2 except that, in the formation of the intermediate layer, carbon black having D50 of 1.8 µm and an average aspect ratio of 18 was used as the second particles.

### <Example 5>

A positive electrode A5 was produced and subjected to the above performance evaluations in the same manner as in Example 2 except that, in the formation of the intermediate layer, carbon black having D50 of 3.6 µm and an average aspect ratio of 36 was used as the second particles.

### <Example 6>

A positive electrode A6 was produced and subjected to the above performance evaluations in the same manner as in Example 2 except that, in the formation of the intermediate layer, carbon black having D50 of 0.036 µm and an average aspect ratio of greater than or equal to 1 and less than or equal to 1.3 was used as the first particles.

### <Comparative Example 1>

A positive electrode B1 was produced and subjected to the above performance evaluations in the same manner as in Example 2 except that, in the formation of the intermediate layer, the first particles were not used and only the second particles were used as the conductive agent.

### <Comparative Example 2>

A positive electrode B2 was produced and subjected to the above performance evaluations in the same manner as in Example 1 except that, in the formation of the intermediate layer, the mass ratio between the first particles and the second particles was changed to 75:25.

### <Comparative Example 3>

A positive electrode B3 was produced and subjected to the above performance evaluations in the same manner as in Comparative Example 2 except that, in the formation of the intermediate layer, carbon black having D50 of 22.9 µm and an average aspect ratio of 5 was used as the second particles.

### <Comparative Example 4>

A positive electrode B4 was produced and subjected to the above performance evaluations in the same manner as in Comparative Example 2 except that, in the formation of the intermediate layer, the mass ratio between the first particles and the second particles was changed to 50:50.

**[Table 1]**

| | Content of conductive agent (mass%) | First particles | | Second particles | | Binder | | Performance evaluation | |
|---|---|---|---|---|---|---|---|---|---|
| | | D50 (µm) | Content (mass%) | D50 (µm) | Aspect ratio | First particle portion (F mass%) | Second particle portion (F mass%) | Interface resistance (Ωcm²) | Peeling strength (N/m) |
| A1 | 83 | 0.023 | 25 | 2.4 | 24 | 3.5 | 0.0 | 0.048 | 20.1 |
| A2 | 71 | 0.023 | 25 | 2.4 | 24 | 3.5 | 0.0 | 0.074 | 22.8 |
| A3 | 71 | 0.023 | 10 | 2.4 | 24 | 3.0 | 0.0 | 0.063 | 20.6 |
| A4 | 71 | 0.023 | 25 | 1.8 | 18 | 3.5 | 0.0 | 0.092 | 11.8 |
| A5 | 71 | 0.023 | 25 | 3.6 | 36 | 3.5 | 0.0 | 0.054 | 18.1 |
| A6 | 71 | 0.036 | 25 | 2.4 | 24 | 3.5 | 0.0 | 0.101 | 27.7 |
| B1 | 71 | - | 0 | 2.4 | 24 | - | - | 0.191 | 8.3 |
| B2 | 83 | 0.023 | 75 | 2.4 | 24 | - | - | 0.167 | 37.3 |
| B3 | 83 | 0.023 | 75 | 22.9 | 5 | - | - | 0.189 | 6.0 |
| B4 | 83 | 0.023 | 50 | 2.4 | 24 | - | - | 0.125 | 34.8 |

As shown in Table 1, the positive electrodes of Examples yield low interface resistance between the core and the mixture layer and high peeling strength of the mixture layer compared with the positive electrodes of Comparative Examples. That is, the positive electrodes of Examples may achieve both of the low interface resistance and the high peeling strength. The positive electrodes of Comparative Examples fail to achieve such characteristics. The positive electrode of Comparative Example 1, which comprises the intermediate layer including no first particles as small particles, yields low peeling strength and high interface resistance. The positive electrode of Comparative Example 2, which comprises the intermediate layer including a large amount of the first particles, yields high peeling strength but fails to reduce the interface resistance. Compared with the positive electrode of Comparative Example 2, the positive electrode of Comparative Example 3, which has the enlarged particle diameter of the second particles in the intermediate layer, exhibits considerably low peeling strength and increased interface resistance. The positive electrode of Comparative Example 4 also fails to sufficiently reduce the interface resistance.

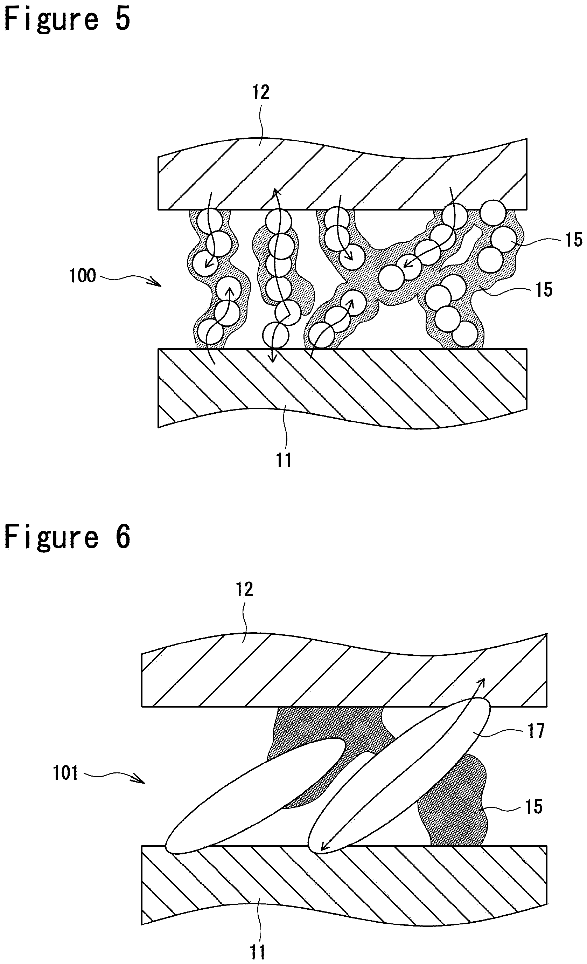

FIG. 5 is a view schematically illustrating a cross section of the positive electrode of Comparative Example that comprises an intermediate layer 100 including no second particles 17 as large particles. The intermediate layer 100 illustrated in FIG. 5 has a structure similar to the intermediate layers of Comparative Examples 2 and 3 among Comparative Examples 1 to 4. It is considered that the first particles 16 are incorporated into the binder 15 in the intermediate layer 100 to inhibit the conductive path, leading to increased interface resistance. Specifically, in a case where the second particles 17 are absent in the intermediate layer or a case where the content of the second particles 17 is smaller than the predetermined amount, a good conductive path is not formed to considerably increase the interface resistance.

FIG. 6 is a view schematically illustrating a cross section of the positive electrode of Comparative Example 1, which comprises an intermediate layer 101 including no first particles 16 as small particles. In the intermediate layer 101, compatibility between the first particles 16 and the binder 15 is low, and accordingly, the adhesive force of the intermediate layer 101 decreases, which consequently increases the interface resistance. Specifically, in a case where the first particles 16 are absent in the intermediate layer or a case where the content of the first particles 16 is smaller than the predetermined amount, not only the peeling strength of the mixture layer considerably decreases, but also the interface resistance considerably increases.

In contrast, in the intermediate layer 13 illustrated in FIG. 3 (intermediate layer of Example), the second particles 17 as large particles, which are not incorporated into the binder 15, form a good conductive path to reduce the interface resistance, and the first particles 16 as small particles, which have high compatibility with the binder 15, yield the high peeling strength. By adding the first particles 16 and the second particles 17 into the intermediate layer 13 and regulating the mass ratio of these particles within the specific range, the interaction between the first particles 16 and the second particles 17 is effectively exhibited, and both of the low interface resistance and the high peeling strength may be thus achieved.

### REFERENCE SIGNS LIST

10 electrode, 11 core, 11z long core, 12 mixture layer, 12z mixture sheet, 13 intermediate layer, 14 conductive agent, 15 binder, 16 first particle, 17 second particle, 20 mixture, 30 mixer, 31, 32 roller

## Claims

1. An electrode, comprising:
a core;
a mixture layer provided on the core; and
a conductive intermediate layer provided between the core and the mixture layer, wherein
the mixture layer includes an active material and a first binder,
the intermediate layer includes a conductive agent and a second binder,
the conductive agent has particle size distribution including: a first peak of a particle diameter within a range of greater than or equal to 0.005 µm and less than or equal to 0.07 µm; and a second peak of a particle diameter within a range of greater than or equal to 0.5 µm and less than or equal to 10 µm,
a content of first particles to which the first peak is assigned is greater than or equal to 1 mass% and less than or equal to 40 mass% based on a mass of the conductive agent, and
the second binder contains a thermoplastic resin having a melting point of greater than or equal to 100°C and less than or equal to 200°C as a main component and has a composition differing from that of the first binder.

2. An electrode, comprising:
a core;
a mixture layer provided on the core; and
a conductive intermediate layer provided between the core and the mixture layer, wherein
the mixture layer includes an active material and a first binder,
the intermediate layer includes a conductive agent and a second binder,
the conductive agent includes: first particles having a particle diameter of greater than or equal to 0.005 µm and less than or equal to 0.07 µm and forming an aggregation structure having a form like a string of beads; and second particles having a particle diameter of greater than or equal to 0.5 µm and less than or equal to 10 µm,
a content of the first particles is greater than or equal to 1 mass% and less than or equal to 40 mass% based on a mass of the conductive agent, and
the second binder contains a thermoplastic resin having a melting point of greater than or equal to 100°C and less than or equal to 200°C as a main component and has a composition differing from that of the first binder.

3. The electrode according to claim 2, wherein a content of the second particles is greater than or equal to 60 mass% and less than or equal to 99 mass% based on the mass of the conductive agent.

4. The electrode according to any one of claims 1 to 3, wherein a content of the conductive agent is greater than or equal to 50 mass% and less than or equal to 90 mass% based on a mass of the intermediate layer.

5. The electrode according to any one of claims 1 to 4, wherein
the first binder is a fibrous binder, and
when the mixture layer is trisected in a thickness direction into a first region, a second region, and a third region from a side of the core, a content (a) of the fibrous binder in the first region, a content (b) of the fibrous binder in the second region, and a content (c) of the fibrous binder in the third region satisfy (c - a)/(a + b + c) ≤ ±10%.

6. The electrode according to any one of claims 1 to 5, wherein
the conductive agent is a carbon material, and
the thermoplastic resin is a homopolymer or copolymer of vinylidene fluoride.

7. The electrode according to any one of claims 1 to 6, wherein the second binder is locally present around the first particles in the intermediate layer.

8. The electrode according to any one of claims 1 to 7, wherein the conductive agent includes particles having a particle diameter of greater than or equal to 0.5 µm and less than or equal to 10 µm and having an average aspect ratio of greater than or equal to 10 and less than or equal to 40.

9. The electrode according to any one of claims 1 to 8, wherein the mixture layer includes a conductive agent having a particle diameter of greater than or equal to 0.005 µm and less than or equal to 0.07 µm and forming an aggregation structure having a form like a string of beads.

10. The electrode according to any one of claims 1 to 9, wherein the electrode is a positive electrode for a secondary battery.
